# EUROPEAN PATENT APPLICATION

(11) **EP 0 661 360 A1**
(43) Date of publication of application: **05.07.1995**
(21) Application number: 94120099.0
(22) Date of filing: 19.12.1994
(51) Int. Cl.: C09D 133/14, C09D 133/06, C09D 175/00, C08K 5/21, C08K 5/16

(54) **Low VOC clearcoat compositions containing reactive urea/urethane oligomers**

(30) Priority: 28.12.1993 US 174636
(71) Applicant: BASF CORPORATION, Mount Olive, New Jersey 08728-1234 (US)
(72) Inventor: Shepler, Stuart, Bowling Green, Ohio 43402 (US); Dantiki, Sudhar, Toledo, Ohio 43617 (US); Braun, David W., Waterville, Ohio 43566 (US)
(74) Representative: Münch, Volker, Dr.

(57) **Abstract**

Novel solvent borne clearcoat compositions are disclosed. The compositions are useful as low VOC coatings and contain reactive urea/urethane oligomers. The reactive urea/urethane oligomers are comprised of the reaction product of a polyisocyanate and a hydroxyl functional component.

## Description

### FIELD OF THE INVENTION

The present invention relates to automotive paint compositions and more particularly to low volatile organic content (VOC) automotive paint compositions containing novel reactive oligomers.

Automotive paint compositions according to the present invention having low VOC content comprise clear coat auto paint compositions that may be utilized over clearcoat auto paint compositions such as pigmented basecoat formulations.

### BACKGROUND OF THE INVENTION

The present invention is directed to automotive clearcoat compositions having a high solids content and low VOC properties. These coatings have been found to exhibit excellent physical properties with short tack-free and dust-free time and excellent pot and shelf life.

While any substrate material can be coated with the coating composition according to the present invention, including such things as glass, ceramics, paper, wood and even plastic material depending on the specific drying and/or curing requirements of the particular composition, the coating composition of the present invention is particularly adapted for metal substrates, and specifically as an automotive paint refinish system. The substrate may be bare substrate material or can be conventionally primed, for example to impart corrosion resistance. Exemplary metal substrates include such things as steel, aluminum, copper, zinc, magnesium, alloys thereof, etc. The components of the compositions can be varied to suit the temperature tolerance of the substrate material. For example, the components can be so constituted for air drying (i.e. ambient, low temperature cure, e.g. 80°F. - 180°F.), or high temperature cure, e.g., over 180°.

### SUMMARY OF THE INVENTION

The present invention relates to a novel coating composition comprising:
a) 5-65 percent of an acrylic co-polymer with a glass transition temperature between -10°C and 35°C (using the Fox method of Tg calculation) and a relative weight average molecular weight of 1,000-7,000.
b) 10 to 50 percent of an organic solvent
c) 1 to 30 percent of a reactive urea/urethane oligomer,
d) 1 to 30 percent of a reactive diluent and,
e) 1 to 3 percent of a curing catalyst
   According to one aspect of the present invention, improved low VOC coating compositions with improved durability and low color are disclosed.

The coating compositions of the present invention can be used over either pigmented topcoats or as the clearcoat of pigmented basecoat/clearcoat multicoat coating compositions. It is preferred to use the coatings of the present invention as a clear topcoat. Although the topcoat clear coating is preferred, it will be appreciated that the coatings described herein can also have utility as clearcoat over a pigmented basecoat.

The clearcoat material, comprises any suitable film-forming material conventionally used in this art including acrylics, alkyd, polyurethanes, polyesters and aminoplast. The clearcoat can be deposited out of an aqueous carrier, or out of conventional volatile organic solvents such as aliphatic, cycloaliphatic and aromatic hydrocarbons, esters, ethers, ketones and alcohols including such things as toluene, xylene, butyl acetate, acetone, methyl isobutyl ketone, butyl alcohol, etc. When using volatile organic solvents, although it is not required, it is preferred to include a conventional rheology control agent such as about 2% to about 50% by weight of a cellulose ester and/or wax (e.g. polyethylene) which facilitates quick release of the volatile organic solvent resulting in improved flow or leveling out of the coating. The cellulose esters used must be compatible with the particular resin system selected and include such things as cellulose nitrate, cellulose propionate, cellulose butyrate, cellulose acetate butyrate, cellulose acetate propionate and mixtures thereof. The cellulose esters when used are preferably used in about 5% to about 20% by weight based on film forming solids.

Rheology control agents conventional in this art include microparticles or microgels and may be utilized in this invention. These microgels or microparticles comprise polymer particles in a dispersed state. Typically, about 2 wt. % to about 20 wt. % of solid vehicle of a microparticle dispersion is added to the basecoat formulation. Microparticle or microgel dispersions, also known as nonaqueous dispersions, useful as rheology control agents in the basecoats of the present invention are disclosed in U.S. pat. nos. 3,365,414, 4,290,932, 4,377,661, 4,414,357, 4,447,536 which are incorporated herein by reference.

The acrylic resins in the clearcoat may be either thermoplastic (acrylic lacquer systems) or thermosetting. Acrylic lacquers such as are described in U.S. Pat. No. 2,860,110 are one type of film forming composition useful according to this invention in the basecoat. The acrylic lacquer compositions typically include homopolymers of methyl methacrylate and copolymers of methyl methacrylates which contain among others, acrylic acid, methacrylic acid, alkyl esters of acrylic acid, alkyl esters of methacrylic acid, vinyl acetate, acrylonitrile, styrene and the like.

The low VOC coating composition useful to form the clearcoat formulation are typically made from copolymer compositions as described and claimed in related copending U.S. application filed and incorporated herein by reference.

The reactive urea/urethane oligomers useful according to this invention include those described and claimed in detail in copending application S.N. , filed .

The reactive urea/urethane compound is comprised of the reaction product of a polyisocyanate and a hydroxyl functional component with structure: 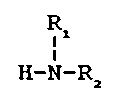
where
- R₁: = alkyl or cycloaliphatic or benzylic type aryl (shielded aromatic ring) radical with a hydroxyl group.
- R₂: = Hydrogen or alkyl or cycloaliphatic or benzylic type aryl (shielded aromatic ring) radical with or without a hydroxyl group.

### DESCRIPTION OF PREFERRED EMBODIMENTS

The present invention relates to a novel coating composition comprising:
a) 5-65 percent of an acrylic co-polymer comprising a copolymer with a glass transition between -10°C and 35°C (using the Fox method of Tg calculation) and a relative weight average molecular weight of 1,000-7,000,
b) 10 to 50 percent of an organic solvent
c) 1 to 30 percent of a reactive oligomer
d) 1 to 30 percent of a reactive diluent
e) 1 to 3 percent of a curing catalyst, and
   According to one aspect of the present invention improved low VOC coating compositions with improved durability are disclosed.

Especially preferred are overcoats over low VOC basecoats and single stage topcoats comprising about 25 to 50 percent copolymer 10 to 30 percent solvents, 10 to 30 percent crosslinking agents, 1 to 10 percent reactive oligomer, 1 to 10 percent additives such as accelerators, mar and slip agents, flow modifiers, anti-settle agents, pigment wetting agents, ultraviolet light absorbers and stabilizers and 1 to 35 percent pigments.

Preferred copolymers which, when crosslinked with isocyanate or non-isocyanate crosslinker, form coatings, which have excellent physical properties with short tack-free and dust-free time, excellent pot-life, and no strong mercaptan odor. The copolymer preferably consists of: the polymerization product of ethylenically unsaturated monomers containing hydroxyl groups and other vinyl monomers wherein the copolymer components are combined in such a manner to give a polymer with a moderate glass transition temperature preferably between about -10°C to about 35°C (using the Fox method of Tg calculation) and a relative weight average molecular weight of less than 10,000. The molecular weight is preferably from about 1,000 - 7,000 based on GPC using polystyrene standards.

The copolymer can also consist of: the polymerization product of ethylenically unsaturated monomers containing vinyl monomers wherein at least one of the vinyl monomers in glycidyl or acid functional, and optionally vinyl monomers containing hydroxyl groups wherein the copolymer components are combined in such a manner to give a polymer with a moderate glass transition temperature as defined above and a relative weight average molecular weight of less than 10,000 preferably from about 1,000 to 7,000 based on GPC using polystyrene standards. The reactive oligomers useful according to this invention are preferably the reactive oligomers and are described and claimed in copending application , filed These oligomers typically contain reactive groups such as primary hydroxyl groups.

These reactive oligomers of the present invention are essentially free of isocyanate groups, are of low to medium molecular weight, and contain free reactive groups other than isocyanates. These free reactive groups are especially useful to provide for crosslinking in coatings. Reactive oligomers so produced are especially useful in coating compositions and in particular in auto refinish paint compositions where the oligomers can be used to accelerate the crosslinking of auto refinish paint compositions. Solvents of utility in the coatings are those commonly used in the art. Especially preferred are methyl ethyl ketone, methyl amyl ketone, methyl isobutyl ketone, n-butyl alcohol, toluene, xylene, propylene glycol monomethyl ester acetate, 3-methocy n-butyl acetate, ethylene glycol butyl ether acetate and ethanol.

Both isocyanates and non-isocyanate crosslinking agents may be used in these coatings compositons. Crosslinking agents of utility in these coatings are those commonly used in the air. They include but are not limited to biurets, isocyanurates or adducts of toluene diisocyanate, hexamethylene diisocyanate, isophorone diisocyanate and meta-tetramethyl xylene. Reaction products of malamine or urea and formaldehyde and various alcohols containing up to and including four carbon atoms. This includes partially alkylated melamine-formaldehyde resins and fully alkylated aminoplast of a low amino content such as Monsanto Resimene RF4518. Also finding utility when used with the non-isocyanate crosslinking agents are ketone and aldehyde modifying resins which include but are not limited to BASF Laropal A81, Laropal K80; Huls America Synthetic resin AP, Synthetic resin H, and Synthetic resin BL 1201 and ICI Lumiflon LF-916.

Especially preferred are 1,6 hexamethylene diisocyanate isocyanate, isophorone diisocyanate isocyanurate, Monsanto Resimene RF4518, BASF Laropal A81 and ICI Lumiflon LF-916.

Additives of utility in these coatings are those commonly used in the art. Mar and slip agents and defoamers which find utility included but are not limited to Byk 304, Byk 306, Byk 307, Byk 325, Byk 341, Dow Corning #7, Dow Corning #54, Dow Corning #200, General Electric SF-69, Tego Glide 410, Mobay OL44, especially preferred is Byk 307.

Also finding utility are cure accelerators which include but are not limited to organic-metallic compounds such as dibutyltindioxide, dibutyltindilaurate, zinc, octoate; amine compounds such as triethylamine, 2-diethylaminoethanol, triethylene diamine; organic acids such as p-toluene sulfonic acid, dinonylnapthalene disulfonic acid and dibutyl sulfonic acid. Especially preferred are dibutyltindilaurate, 2-diethylaminoethanol and p-toluene sulfonic acid.

Also finding utility are flow and rheology modifying agents which include but are not limited to synthetic amorphos hydrophobic silica such as Degussa Aerosil R972, synthetic amorphos hydrophillic silica Degussa Aerosil 200, organo clays, polyethylene wax dispersions, polypropylene wax dispersions, polyamid wax dispersions, ethylene vinyl acetate wax dispersions. Agents such as Byk Chemie Anti-terra 202, Anti-terra 204, Anti-terra V, Byk W-960, Byk R-405, Byk P-104, Byk P-104s; Troy Cheimical Troythix Antisag4, Troythix Antisettle; Raybo Chemical Raybo 6, Raybo 94, and Tego Chemie ZFS 460. Especially preferred are Degussa Aerosil R972, Byk W960 and Byk R405.

Also finding utility are flow and rheology modifying agents which include but are not limited to synthetic amorphos hydrophobic silica such as Degussa Aerosil R972, synthetic amorphos hydrophillic silica Degussa Aerosil 200, organo clays, polyethylene wax dispersions, polypropylene wax dispersions, polyamid wax dispersions, ethylene vinyl acetate wax dispersions. Agents such as Byk Chemie Anti-terra 202, Anti-terra 204, Anti-terra V, Byk W-960, Byk R-405, Byk-P104, Byk P-104s; Troy Chemical Troythix Antisaga4, Troythix Antisettle; Raybo Chemical Raybo 6, Raybo 94, and Tego Chemie ZFS 460. Especially preferred are Degussa Aerosil R972, Byk960 and Byk R405.

Also finding utility are pigment wetting and dispersing aids which include but are not limited to ICI Solsperse hyperdispersants such as Solsperse 5000, 12000, 22000 and 24000; Troy Chemical Troysol CD1, Troysol CD2 and Troysol 98C; Daniel Products DispersAyd 9100; Raybo Chemical Raybo 63; Byk Chemie Anti-terra U, Anti terra 202, Byk W-960, Byk P-104 Disperbyk 160, Disperbyk 162, Disperbyk 163; Nuodex Nuosperse 657; Nuosperse 700. Especially preferred is Disperbyk 163.

Also finding utility in these coatings are ultraviolet light absorbers and stabilizers which include but are not limited to Sandoz Chemicals Sanouvor 3206, Sanduvor VSU, Sanduvor 3050; Ciba Geigy Corp. Tinuvin 292, Tinuvin 328, Tinuvin 440, Tinuvin 900, Tinuvin 1130. Especially preferred are Tinuvin 292 and Tinuvin 1130.

Also finding utility in these coatings are various types pigments common to the art which include but are not limited to Titanium Dioxide, phthalocyanine blue, phthalocyanine green, carbon black guinacridone, carbizole violet, isoindolinone, pyrrolopyrrol, isoindolin, azomethine, anthraquinone, lead chromate molybdate, lead sulfa chromate, ferric oxides, magnesium silicates, and aluminum. Especially preferred are Dupont Ti-Pure Titanium Dioxide and Mobay B-4730 phthalocyanine blue, Toyo 7130 N aluminum, Hoechst Novoperm Red F2RK-70 and Hoechst Permanent Yellow HR-70.

The following examples are given to illustrate the low VOC coatings according to the present invention. In the examples the following three tests were used to determine the usefulness of the coating as a refinish paint.

### DUST FREE TIME

The dust free time testing is intended to define the time that elapses between film application and the point when the film will not retain particulate material which may come to rest on the film. The test method is as follows:

The paint to be tested is spray applied to a 4" by 12" bare steel panel at a dry film thickness of 2.0 to 2.5 mils. At the appropriate time interval, approximately 1.0 gram of clean dry sea sand is applied to the surface. The sand is allowed to rest on the surface for 15 seconds, then the panel is struck sharply on its side in order to dislodge the sand. The paint is considered dust free if at all or all but a few of the grains of sand are removed.

### TACK FREE TIME

The tack free testing is intended to define the time that elapses between film application and the point when the film may be handled without permanent impressions being left in the film. The test method is as follows.

The paint to be tested is spray applied to a 4" by 12" bare steel panel at a dry film thickness of 2.0 to 2.5 mils. At the appropriate time interval, a 1 inch square piece of typing paper is placed on the film. A 100 gram, 1 inch square, flat weight is then placed on the paper for one minute. The panel is then struck sharply on its side in order to dislodge the paper. The paint is considered tack free when the paper comes off the panel when struck.

### GASOLINE SOAK RESISTANCE

The gasoline soak resistance test is intended to define the time required at normal ambient temperature (approx. 75 degrees fahrenheit) for a paint film to become sufficiently crosslinked to resist the attack of gasoline.

The paint to be tested is spray applied to a 4" by 12" bare steel panel at a dry film thickness of 2.0 to 2.5 mils. At the appropriate time, 1/8th of a cotton ball is placed on the panel and one million of unleaded premium gasoline is applied to the cotton. A watch glass is then placed over the cotton. The watch glass is left on the panel for 5 minutes. The watch glass and cotton are then removed and any residual gasoline is removed from the surface with a soft cloth. The paint is considered gasoline resistant when no perceptible swelling occurs in the affected area of the paint.

The following examples illustrate the invention:

### EXAMPLES 1 THROUGH 3

| | Example 1 | Example 2 | Example 3 |
|---|---|---|---|
| Acrylic Polymer | 45.9 | 41.1 | 26.6 |
| Aminol Oligomer | | | 22.7 |
| Ciba-Geigy | 0.9 | 0.8 | 0.9 |
| Ciba-Geigy Tinuvin 292 | 1.1 | 1.0 | 1.1 |
| Additives | 0.3 | 0.3 | 0.4 |
| Organic Solvents | 34.4 | 34.0 | 31.7 |
| Hexamethylene diisocyanate isocyanurate (HDI) | 17.4 | 8.4 | 16.6 |

Example 1 illustrates a clear coating made with acrylic polymer and HDI.
Example 2 illustrates a clear coating made with acrylic polymer, HDI and IFDI.

### EXAMPLE 4

| Properties | Example 1 | Example 2 | Example 3 |
|---|---|---|---|
| Density (lbs/gal.) | 8.00 | 7.96 | 8.01 |
| Wt. N.V. (%) | 53.56 | 50.89 | 51.79 |
| VOC (lbs./gal.) | 3.72 | 3.91 | 3.86 |
| Viscosity (sec. #4 Ford) | 16.4 | 15.6 | 16.5 |
| Dust free (hr.) | 7 | 2.5 | 2 |
| Tack free (min.) | >7 | 6 | 5 |
| Pot-life to reach 25°, hr.) | 4 | >8 | 4 |
| Koenig Hardness @ 2 mils. 24 hr. air dry (sec.) | 14 | 25 | 34 |

In Example 1, it is shown that long dry times and coatings which are soft overnight are the result when a hard, high Tg component is absent from the vehicle system. The vehicle in Example 1 contains only high solids acrylic polymer and HDI, both which have relatively low Tg.
In Example 2, IPDI, which has a relatively high Tg, is added. This serves to speed the dry time and increase hardness development. However, there is some increase in VOC.
The oligomer serves the same function as IPDI - to speed the dry time - but do it better. Not only is the dry time shortened, but there is better hardness development overnight and some benefit to VOC.

## Claims

1. An ambient cure clearcoat coating composition comprising:
a) 5-65 percent of an acrylic copolymer comprising a copolymer with a glass transition temperature between - 10°C and 35°C (using the Fox method of Tg calculation) and a relative weight average molecular weight 1000 - 7000.
b) 10 to 50 percent of an organic solvent,
c) 1 to 30 percent of a reactive urea/urethane oligomer,
d) 1 to 30 percent of a reactive diluent,
e) 0 to 3 percent of a curing catalyst,

2. A coating composition according to claim 1 wherein the copolymer is polymerized in the presence of a polymerization initiator.

3. A coating composition according to claim 1 wherein the reactive urea/urethane compound is comprised of the reaction product of a polyisocyanate and a hydroxyl functional component that has the structure: 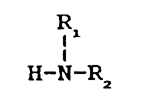 where
R₁ is alkyl or cycloaliphatic or benzylic type aryl (shielded aromatic ring) radical with a hydroxyl group, and
where
R₂ is Hydrogen or alkyl or cycloaliphatic or benzylic type aryl (shielded aromatic ring) radical with or without hydroxyl group.
